# EUROPEAN PATENT APPLICATION

(11) **EP 1 405 879 A1**
(43) Date of publication of application: **07.04.2004**
(21) Application number: 02765378.1
(22) Date of filing: 29.08.2002
(51) Int. Cl.: C08L 67/02, C08J 5/00

(54) **FLAME RETARDANT POLYETHYLENE TEREPHTHALATE RESIN COMPOSITION**

(30) Priority: 10.09.2001 JP 2001273140
(71) Applicant: Win Tech Polymer Ltd., Tokyo 100-6006 (JP)
(72) Inventor: NUMATA, Takayoshi, c/o Polyplastics Co., Ltd., Fuji-shi, Shizuoka 416-8533 (JP)
(74) Representative: Schuster, Thomas, Dipl.-Phys.
(86) International application number: PCT/JP2002/008770
(87) International publication number: WO 2003/022925

(57) **Abstract**

A flame-retardant polyethylene terephthalate-series resin composition comprises, relative to 100 parts by weight of (A) a polyethylene terephthalate-series resin, (B) 5 to 60 parts by weight of a bromine-containing flame retardant in which 5% by weight reduction from the initial weight thereof is given at a temperature of not less than 360°C under heating the flame retardant at a heating rate of 10°C/min. in a nitrogen stream; (C) 0.01 to 20 parts by weight of a crystallization accelerator; (D) 0.01 to 20 parts by weight of a colorant; and (E) 0.01 to 5 parts by weight of an antioxidant. The resin composition is excellent in resistance to heat/humidity, and has a color difference represented by a ΔE value of not more than 15 under heating the composition at 210°C for 24 hours. The resin composition may comprise an antimony-containing flame-retardant synergist and/or an inorganic filler.

The resin composition ensures effective inhibition of discoloration, and strikes a balance between mechanical properties and heat fading resistance.

## Description

### TECHNICAL FIELD

The present invention relates to a flame-retardant polyethylene terephthalate-series resin composition excellent in hue and useful for a lighting equipment or member, and a lighting equipment using the same. More specifically, the present invention relates to a flame-retardant polyethylene terephthalate-series resin composition comprising a specific bromine-containing flame retardant which shows a low degree of heat fading and has an excellent hue, and a lighting equipment using the same.

### BACKGROUND ART

A thermoplastic aromatic polyester resin as represented by a polyethylene terephthalate has been widely used for electric or electronic parts, automotive parts, and other mechanical parts because of being excellent in mechanical strength, chemical resistance, electrical insulation performance and other performance. Further, flame retardancy has been required to a molding material in order to meet the need of safety improvement in a product (or manufactured article).

However, blending a flame retardant or a flame-retardant synergist to a polyester resin for giving a self-extinguishing makes the polyester resin deteriorated in physical properties because of decomposition of the polyester as a base substance by the interaction with the polyester and the flame retardant or the flame-retardant synergist to be used in combination in such a process as producing and shaping or manufacturing the composition and further in such a usage as using a shaped article under an atmosphere with high temperature.

Moreover, a polyester resin has been widely used for a lighting equipment. Recently, a lamp and an appliance are getting to be downsized and brightness of a light source is getting to be high. In order to insure the safety of a product as a lighting equipment, it has been required to use a flame retardant material having a high-melting point (for example, a polyethylene terephthalate-series resin).

However, in the case exposing a polyethylene terephthalate comprising a flame retardant to a strong light or a high temperature, the polyethylene terephthalate cannot be used as a lighting equipment in many cases because of significant discoloration. For example, as a standard of a part for an lighting (or illuminating) socket, the degree of discoloration should be not more than 15 of a color difference represented by a ΔE value under heating at 210°C for 24 hours.

Furthermore, in the case using the resin composition in a high temperature and humidity area (for example, in the case using the resin composition as a lighting equipment), the resin composition is sometimes required to have high resistance to heat/humidity.

Japanese Patent Application Laid-Open No. 198910/2000 (JP-2000-198910A) discloses a thermoplastic polyester resin composition for a lighting equipment, which comprises 0 to 150 parts by weight of an inorganic filler, 0 to 60 parts by weight of a bromine-containing flame retardant, 0 to 30 parts by weight of an antimony-containing flame-retardant synergist, and 0.01 to 5 parts by weight of an antioxidant containing a specific hindered phenol-series compound relative to 100 parts by weight of a thermoplastic aromatic polyester. Japanese Patent Application Laid-Open No. 92643/1999 (JP-11-92643A) discloses a thermoplastic polyester resin composition for a lighting equipment, which comprises 0 to 150 parts by weight of an inorganic filler, 5 to 60 parts by weight of a specific bromine-containing flame retardant, 0 to 20 parts by weight of an antimony-containing flame-retardant synergist, and 0 to 5 parts by weight of a light stabilizer relative to 100 parts by weight of a thermoplastic aromatic polyester. In these documents, a brominated bisphenol A-series compound (polycarbonate, epoxy resin) is described as a bromine-containing flame retardant.

Japanese Patent Application Laid-Open No. 2304047/2001 (JP-2001-2304047A) discloses a flame-retardant polyethylene terephthalate resin composition for a lighting equipment, which comprises 5 to 60 parts by weight of a bromine-containing flame retardant, 0.01 to 5 parts by weight of a fluorescent brightener (or fluorescent whitening agent), and an organic nucleating agent and/or a talc relative to 100 parts by weight of a polyethylene terephthalate. In this document, there are described, as the bromine-containing flame retardant, a brominated bisphenol A-series polycarbonate, a brominated bisphenol A-series epoxy resin, a brominated polystyrene, and a brominated benzylacrylate.

However, even these resin compositions mentioned above cannot effectively prevent discoloration caused by heat and/or light. Moreover, increase in the amount of the flame retardant or the antioxidant to improve heat and light resistance causes deterioration in mechanical properties of a shaped article.

Further, an inorganic pigment such as titanium oxide may be added to a thermoplastic polyester resin, in order to tone the thermoplastic polyester resin to white color and to inhibit discoloration due to heat and/or light. For example, Japanese Patent Application Laid-Open No. 11292/2001 (JP-2001-11292A) discloses a light-colored (tint-colored) light resistant resin composition which comprises 10 to 50 parts by weight of an acrylic resin having not less than 3 g/10 min. of melt index, 5 to 80 parts by weight of a bromine-containing flame retardant, 3 to 25 parts by weight of an antimony-containing compound, 3 to 45 parts by weight of a titanium oxide-containing colorant, 5 to 200 parts by weight of a reinforcing filler, relative to 100 parts by weight of a thermoplastic polyester, and if necessary, a polyalkylene terephthalate-ether block copolymer and a crystallization accelerator. In this document, as the bromine-containing flame retardant, a brominated polystyrene, a brominated acrylic resin, a brominated imide, or others are described.

In order to bring out light resistance effectively, however, it is necessary to add an inorganic filler at an order of a few % by weight to the composition. Therefore, improvement of heat fading resistance causes deterioration in mechanical properties, thereby mechanical properties and heat fading resistance are incompatible in a high level.

It is therefore an object of the present invention to provide a flame-retardant polyethylene terephthalate-series resin composition being changeless (stable) in hue and useful for forming a lighting equipment or others, and a shaped article thereof (particularly a lighting equipment).

Another object of the present invention is to provide a flame-retardant polyethylene terephthalate-series resin composition being effectively preventable discoloration due to heat and/or light, and compatible mechanical properties with heat fading resistance at a high level, and a shaped article thereof (particularly a lighting equipment).

It is still another object of the present invention to provide a flame-retardant polyethylene terephthalate-series resin composition having high resistance to heat/humidity, which hardly deteriorates even under high temperature and humidity, and a shaped article thereof (particularly a lighting equipment).

### DISCLOSURE OF THE INVENTION

The inventors of the present invention made intensive studies to achieve the above objects, and finally found that use of a specific bromine-containing flame-retardant ensures significant improvement in not only flame retardancy but also heat and light resistance, and further color fastness of a polyethylene terephthalate-series resin. The present invention was accomplished based on the above findings.

That is, the flame-retardant polyethylene terephthalate-series resin composition of the present invention comprises (A) a polyethylene terephthalate-series resin, (B) a bromine-containing flame retardant in which 5% by weight reduction from the initial weight thereof is given at a temperature of not less than 360°C (e.g., at 370 to 500°C) under heating the flame retardant at a heating rate of 10°C/min. in a nitrogen stream, (C) a crystallization accelerator, (D) a colorant, and (E) an antioxidant. The resin composition has high heat fading resistance, and for example, has a color difference represented by a ΔE value of not more than 15 under heating the composition at 210°C for 24 hours. In the resin composition, the proportion of each component is, for example, about 5 to 60 parts by weight of the bromine-containing flame retardant (B), about 0.01 to 20 parts by weight of the crystallization accelerator (C), about 0.01 to 20 parts by weight of the colorant (D), and about 0.01 to 5 parts by weight of the antioxidant (E), relative to 100 parts by weight of the polyethylene terephthalate-series resin (A). Incidentally, the resin composition may comprise an antimony-containing flame-retardant synergist and/or an inorganic filler.

The flame-retardant polyethylene terephthalate-series resin composition of the present invention may be utilized for a shaped article influenced by heat and/or light, for example a lighting equipment. Therefore, the present invention also discloses a shaped article formed with the flame-retardant polyethylene terephthalate-series resin composition.

In this specification, the term "a lighting equipment" means various members disposed close to or in the vicinity of a light source, in contact with or without the light source. For example, the lighting equipment includes a socket component, a holder component, a reflector, a ballast (or stabilizer), or others.

### BEST MODE FOR CARRYING OUT THE INVENTION

The present invention will now be described in detail.

### [Polyethylene terephthalate-series resin (A)]

The polyethylene terephthalate-series resin (A) comprises a thermoplastic aromatic polyester-series resin obtainable from terephthalic acid as a dicarboxylic acid component and ethylene glycol as a diol component.

The polyethylene terephthalate-series resin may be a homopolyester, or a copolyester in which a part of the dicarboxylic acid component and/or diol component is substituted with a copolymerizable component. Among the copolymerizable components, as the dicarboxylic acid component, there may be exemplified an aromatic dicarboxylic acid [isophthalic acid, phthalic acid; an alkyl-substituted phthalic acid such as methylterephthalic acid or a methylisophthalic acid; a naphthalenedicarboxylic acid (e.g., 2,6-naphthalenedicarboxylic acid, 2,7-naphthalenedicarboxylic acid, 1,5-naphthalenedicarboxylic acid); a diphenyldicarboxylic acid such as 4,4'-diphenyldicarboxylic acid or 3,4'-diphenyldicarboxylic acid, a diphenoxyethanedicarboxylic acid such as 4,4'-diphenoxyethanedicarboxylic acid, a diphenyldicarboxylic acid such as diphenyletherdicarboxylic acid, diphenylmethanedicarboxylic acid, diphenylethanedicarboxylic acid or diphenylketonedicarboxylic acid]; an alicyclic dicarboxylic acid (for example, an alicyclic dicarboxylic acid having about 8 to 12 carbon atoms, such as cyclohexanedicarboxylic acid, hexahydrophthalic acid, hexahydroisophthalic acid, hexahydroterephthalic acid, or himic acid) or a derivative thereof; an aliphatic dicarboxylic acid (e.g., an aliphatic dicarboxylic acid having about 4 to 20 carbon atoms, such as succinic acid, adipic acid, pimeric acid, suberic acid, azelaic acid, sebacic acid, decanedicarboxylic acid, dodecanedicarboxylic acid, hexadecanedicarboxylic acid or dimer acid) or a derivative thereof. Incidentally, the derivative of the dicarboxylic acid includes an ester-formable derivative, for example, a lower alkyl ester such as a dimethyl ester, an acid anhydride, an acid halide such as an acid chloride, and others. The copolymerizable dicarboxylic acid or a derivative thereof may be used alone or in combination. The proportion of the copolymerizable component is usually not more than 30 mol% (for example, 0 to 25 mol%, especially 0 to 20 mol%) relative to the total amount of the dicarboxylic acid components.

The diol component as the copolymerizable component includes an aliphatic diol [e.g., a linear or branched C₃₋₁₂alkylenediol such as trimethylene glycol, propylene glycol, 1,3-butanediol, tetramethylene glycol, neopentyl glycol, hexamethylene glycol, octanediol or decanediol], a polyoxyC₂₋₄alkylene glycol (e.g., diethylene glycol, triethylene glycol, a polyoxyethylene glycol, ditetramethylene glycol, a polytetramethylene ether glycol, dipropylene glycol, tripropylene glycol, a polyoxypropylene glycol, or a polytetramethylene ether glycol), an alicyclic diol [e.g., cyclohexanediol, 1,4-cyclohexanedimethanol, or hydrogenated bisphenol A], or an aromatic diol [e.g., a dihydroxybenzene such as hydroquinone or resorcine, naphthalenediol, a bisphenol such as bisphenol A, dihydroxy diphenyl ether or 2,2'-bis(4-hydroxyphenyl)sulfone, or an adduct in which an alkylene oxide (a C₂₋₄alkylene oxide such as ethylene oxide or propylene oxide) is added to a bisphenol (e.g., diethoxylated bisphenol A)]. The copolymerizable component(s) may be used alone or in combination. The proportion of the copolymerizable component is usually not more than 30 mol% (e.g., 0 to 25 mol%, in particular 0 to 20 mol%) relative to the total amount of the diol components.

Further, as the copolymerizable component, there may be also used an hydroxycarboxylic acid component [ e . g. , ε-hydroxycapronic acid, hydroxybenzoic acid, hydroxyethoxybenzoic acid, hydroxynaphthoic acid, diphenyleneoxycarboxylic acid, and a derivative thereof] and/or a lactone component [a C₃₋₁₂lactone such as propiolactone, butyrolactone, valerolactone or caprolactone (e.g., ε-caprolactone)].

Furthermore, in addition to the above-mentioned components, if necessary, a small amount of a polyfunctional monomer, for example, a polycarboxylic acid such as trimellitic acid, trimesic acid or pyromellitic acid, or a polyhydric alcohol such as glycerol, trimethylolpropane or pentaerythritol, may be used in combination. The amount of the polyfunctional monomer is usually not more than 1.0 mol%, preferably not more than 0.5 mol%, and more preferably not more than 0.3 mol%. The use of such a polyfunctional monomer ensures production of a polyester-series resin having a branched or crosslinked structure. Furthermore, the polyethylene terephthalate-series resin (A) may be a liquid crystalline polyester.

The preferred copolymerizable component includes, for example, a C₃₋₆alkylene glycol (e.g., a linear or branched alkylene glycol such as propylene glycol or 1,4-butanediol), a polyoxyC₂₋₄alkylene glycol having a repeating oxyalkylene unit of about 2 to 4 (e.g., diethylene glycol), a C₆₋₁₂aliphatic dicarboxylic acid (e.g., adipic acid, pimelic acid, suberic acid, azelaic acid, sebacic acid), and an aromatic dicarboxylic acid having carboxylic groups as a substituent at asymmetrical positions with each other (or having an asymmetrical structure) (e.g., phthalic acid or isophthalic acid).

The polyethylene terephthalate-series resin (A) is preferably a resin containing an ethylene terephthalate unit as a main component (e.g. , about 50 to 100% by weight, and preferably about 75 to 100% by weight) (for example, a polyethylene terephthalate, a polyethylene terephthalate copolyester).

The polyethylene terephthalate-series resin (A) may be an amorphous (or noncrystalline) one. From the viewpoints of fabrication properties, mechanical properties, or other properties, the resin (A) is preferably a crystalline one. Such a crystalline polyethylene terephthalate-series resin includes, for example, a resin containing at least not less than 60% by weight (e.g., 75 to 100% by weight, preferably 80 to 100% by weight, and more preferably 85 to 100% by weight) of an ethylene terephthalate unit.

The limiting viscosity number (or intrinsic viscosity) of the polyethylene terephthalate-series resin may be suitably selected, and for example, may be about 0.4 to 1.2 dl/g. Incidentally, when the limiting viscosity is low, it is difficult to effectively ensure resin properties. When the limiting viscosity number is too large, the resin has a high melt viscosity, thereby deteriorating in fluidity, and as a result the resin appears to impair moldability. The limiting viscosity number (equal to intrinsic viscosity) is measured in o-chlorophenol as the solvent at 35°C.

The number-average molecular weight of the polyethylene terephthalate-series resin (A) is not particularly limited, and for example, may be selected from a range within about 0.5 x 10⁴ to 100 x 10⁴, preferably about 1 x 10⁴ to 70 x 10⁴, and more preferably about 1.2 x 10⁴ to 30 x 10⁴.

The concentration of the terminal carboxyl group in the polyethylene terephthalate-series resin (A) is not more than 50 meq/kg (e.g., about 1 to 50 meq/kg), preferably about 2 to 40 meq/kg, and more preferably about 3 to 30 meq/kg.

The polyethylene terephthalate-series resin (A) may be produced by a conventional manner such as transesterification or direct esterification.

Incidentally, as the polyethylene terephthalate-series resin, there may be employed a recycled resin obtained by crushing a used resin [e.g., a polyethylene terephthalate (PET) bottle] or by melting and pelletizing the used resin.

Further, if necessary, the polyethylene terephthalate-series resin may be used in combination with other polyester-series resin such as a polyalkylene arylate-series resin. The polyalkylene arylate-series resin includes a homopolyester such as a polyC₃₋₄alkylene terephthalate [e.g., a polypropylene terephthalate (PPT) or a polybutylene terephthalate (PBT)], a poly(1,4-cyclohexane dimethylene terephthalate) (PCT), or a polyC₂₋₄alkylene naphthalate (e.g., a polyethylene naphthalate or a polybutylene naphthalate); and a copolyester containing a C₃₋₄alkylene terephthalate unit and/or a C₂₋₄alkylene naphthalate unit as a main component (e.g., not less than 50% by weight).

The polyethylene terephthalate-series resin mentioned above may be produced by a conventional method. Such a production method includes, for example, a method which comprises preparing a polymer having a low degree of polymerization by direct esterification of at least terephthalic acid with ethylene glycol in the absence or presence of a catalyst, or by transesterification of dimethyl terephthalate with ethylene glycol in the presence of a catalyst; and subjecting the polymer having a low degree of polymerization and a catalyst (e.g., a germanium-containing compound, an antimony-containing compound) to condensation polymerization such as melt polycondensation or solid-phase condensation with maintaining suitable temperatures (e.g., about 240 to 310°C) under a reduced pressure (e.g., under a vacuum such as not more than 0.9 Torr) to obtain a polyethylene terephthalate-series resin. Incidentally, the germanium-containing compound and the antimony-containing compound may be used as a catalyst in combination, or at least the germanium-containing compound may be used as a catalyst.

Moreover, the polyethylene terephthalate-series resin of the present invention may be used for a lighting equipment, whatever a catalyst to be used (for example, the antimony-containing compound or the germanium-containing compound). Incidentally, in the case where high resistance to heat/humidity is needed, it may be desirable to use a polyethylene terephthalate-series resin produced by using the germanium-containing compound as a catalyst in polycondensation of the polymer having a low degree of polymerization. In the case using a compound other than a germanium-containing compound (e.g., the antimony-containing compound) in polymerization, prolonged use of the polyethylene terephthalate-series resin under a high temperature and humidity sometimes deteriorates mechanical strength, thereby degrading high resistance to heat/humidity. Detailed reasons are not clear, however, it seems that a polyethylene terephthalate-series resin obtained by using a compound other than a germanium-containing compound as a catalyst may be apt to be hydrolyzed.

As the germanium-containing compound, there may be exemplified a germanium oxide (e. g. , germanium dioxide), a germanium alkoxide (e.g., germanium tetraethoxide or germanium tetraisopropoxide), a germanium hydroxide and an alkali metal salt thereof, a germanium glycolate, a germanium chloride (e.g., germanium tetrachloride) or a germanium acetate. These germanium-containing compounds may be used singly or in combination.

The amount of the germanium-containing compound is, for example, about 0.004 to 0.09% by weight, and preferably about 0.02 to 0.06% by weight relative to the polyethylene terephthalate resin.

### [Bromine-containing flame retardant (B)]

As the bromine-containing flame retardant, there may be mentioned a bromine-containing compound in which 5% by weight reduction from the initial weight thereof is given at a temperature of not less than 360°C (e.g., 360 to 500°C) under heating the flame retardant at a heating rate of 10°C/min., preferably not less than 370°C (e.g., 370 to 500°C), more preferably not less than 380°C (e.g., 380 to 450°C), and particularly not less than 390°C (e.g., 390 to 450°C).

Examples of the flame retardant mentioned above are a vinyl-series polymer and/or a brominated aromatic bisimide compound. As the vinyl-series polymer, a brominated polystyrene and a brominated benzylacrylate are preferred. The brominated aromatic bisimide compound includes, for example, a N,N'-alkylenebis(bromophthalimide) [e.g., a N,N'-C₁₋ ₁₀alkylenebis(3,4,5,6-tetrabromophthalimide) such as N,N'-methylenebis(3,4,5,6-tetrabromophthalimide), N,N'-(1,2-ethylene)-bis(3,4,5,6-tetrabromophthalimide), N,N'-propylenebis(3,4,5,6-tetrabromophthalimide), N,N'-tetramethylenebis(3,4,5,6-tetrabromophthalimide), or N,N'-hexamethylenebis(3,4,5,6-tetrabromophthalimide)], a N,N'-arylenebis(3,4,5,6-tetrabromophthalimide) [e.g., a N,N'-C₆₋ ₁₂arylenebis(3,4,5,6-tetrabromophthalimide) such as N,N'-(p- or m-phenylene)-bis(3,4,5,6-tetrabromophthalimide)], a N,N'-(diphenylalkane-diyl)-bis(3,4,5,6-tetrabromophthalimide) [e.g., N,N'-(methylene-di-p-phenylene)-bis(3,4,5,6-tetrabromophthalimide)], a N,N'-(diphenylether-diyl)-bis(3,4,5,6-tetrabromophthalimide) [e.g., N,N'-(oxy-di-p-phenylene)-bis(3,4,5,6-tetrabromophthalimide)], an N,N'-(haloxylylene)-bis(3,4,5,6-tetrabromophthalimide) [e.g., N,N'-(p- or m-tetrachloroxylylene)-bis(3,4,5,6-tetrabromophthalimide) or N,N'-(p- or m-tetrabromoxylylene)-bis(3,4,5,6-tetrabromophthalimide)], N,N'-bis(1,2,3,4,5-pentabromobenzyl)-pyromellitimide, or N,N'-bis(2,4,6-tribromophenyl)-pyromellitimide. The bromine-containing flame retardant(s) may be used singly or in combination.

The preferred bromine-containing flame retardant is a N,N'-alkylenebis-bromophthalimide satisfying a weight reduction under heating and having high fading resistance (for example, a C₂₋ ₆alkylenebistetrabromophthalimide, in particular ethylenebistetrabromophthalimide), or a brominated polystyrene. In particular, the bromine-containing flame retardant preferably comprises at least an alkylenebisbromoaryl compound.

Incidentally, if necessary, a conventional bromine-containing flame retardant, such as a brominated bisphenol A-based polycarbonate resin or a brominated bisphenol A-based epoxy resin, may be additionally used.

The amount of the bromine-containing flame retardant is about 3 to 60 parts by weight (e.g., about 5 to 60 parts by weight), preferably about 5 to 50 parts by weight (e.g., about 10 to 50 parts by weight), more preferably about 5 to 30 parts by weight, and usually about 3 to 15 parts by weight (e.g., about 5 to 10 parts by weight) relative to 100 parts by weight of the polyethylene terephthalate-series resin. Incidentally, in a composition containing a large amount of the inorganic filler or a composition containing the flame retardant in combination with the flame-retardant synergist, the amount of the flame retardant can be reduced. Even in such a case, it is advantageous that the amount of the bromine-containing flame retardant is at least 5 parts by weight.

### [Crystallization accelerator (C)]

The kind of the crystallization accelerator (or crystallizing accelerator) is not particularly limited as far as the crystallization accelerator ensures crystallization acceleration of the above-mentioned polyester-series resin and improvement in moldability thereof. As the crystallization accelerator, usually, an organic nucleating agent and/or a talc may be used. As the organic nucleating agent, there may be used a metal salt of an aromatic carboxylic acid and/or aliphatic carboxylic acid having 7 to 36 (preferably 12 to 34) carbon atoms (for example, an alkali metal salt such as a sodium salt or a potassium salt, an alkaline earth metal salt such as a calcium salt, a magnesium salt or a barium salt, a salt of Group 2B metal of the Periodic Table of Element such as zinc, or a salt of Group 3B metal of the Periodic Table of Element such as aluminum). The crystallization accelerator may be used alone or in combination.

As the preferred organic nucleating agent, there may be exemplified a salt of benzoic acid (e.g., sodium benzoate), a salt of naphthalenecarboxylic acid (e.g., sodium naphthalenecarboxylate), or a salt of a saturated carboxylic acid (a salt of a saturated C₁₂₋₄₀carboxylic acid such as sodium palmitate, calcium stearate, sodium montanate, sodium lignocerate or sodium cerotate).

In the use of the organic nucleating agent, specific combination of a metal salt with an antioxidant makes the polyethylene terephthalate resin colored, resulting in limitation usage of the metal salt in such a combination. Moreover, the combination use of the organic nucleating agent with a specific flame retardant sometimes has no remarkable effects of growing nucleuses. In such a case, it is preferred to use the specific flame retardant in combination with a talc. The talc is a hydrous magnesium silicate (3MgO·4SiO₂·H₂O), and the mean particle size is about 5 to 15 µm. When the mean particle size of the talc is smaller than 5 µm, the dispersibility in forming a compound deteriorates, and when the talc constitutes a coarse particle having the mean particle size of larger than 15 µm, the external appearance and commercial value of a shaped article degenerates.

The amount of the crystallization accelerator (C) is about 0.01 to 20 parts by weight (e.g., about 0.1 to 20 parts by weight), preferably about 0.1 to 15 parts by weight (e.g., about 0.1 to 10 parts by weight), and more preferably about 0.5 to 10 parts by weight, relative to 100 parts by weight of the polyethylene terephthalate-series resin.

### [Colorant (D)]

The colorant (or coloring agent) may be utilized for giving color to a shaped article, and includes a dye and a pigment. The dye includes a colored organic compound soluble to water or an organic solvent. The dye is dissolved in the resin, thereby giving a clear color tone to the resin. The concrete dye includes an azo-series dye, an anthraquinone-series dye, a thioindigo-seires dye, a carbonium dye, a quinoline-series dye, an indanthrene-series dye, a pirydone-series dye, a pyridine-series dye, a thiadiazol-series dye, and the like.

As the pigment, there may be used an organic or inorganic pigment slightly soluble to water or an organic solvent. The above-mentioned pigment may be either a chromatic pigment or an achromatic pigment. More specifically, the organic pigment includes an azo-series pigment, a phthalocyanine-series pigment, a quinacridone-series pigment, a benzidine-series pigment, a perylene-series pigment, an isoindolynone-series pigment, a dioxadine-series pigment, a threne-series pigment, and the like. The inorganic pigment includes oxides of various metals (e. g. , titanium oxide, zinc oxide) , carbonates of various metals (e.g., calcium carbonate), sulfides of various metals (e.g., zinc sulfide), sulfates of various metals (e.g., barium sulfate), a red oxide, a yellow iron oxide, an iron blue (Berlin blue), an ultramarine blue, a carbon black, and others. The mean particle size of the pigment may be usually about 10 nm to 3 µm, and preferably about 15 nm to 1 µm.

The colorant may be used alone or in combination. The colorant may form a shaped article having a dark (deep) or light color, or a chromatic or achromatic color. Further, by using the colorant(s), a transparent or semitransparent shaped article may be formed, or an opaque shaped article may be formed.

The preferred colorant comprises a white inorganic pigment, in particular titanium oxide and calcium carbonate. In order to keep (maintain) mechanical strength of the shaped article, the colorant preferably comprises at least calcium carbonate. As the colorant, calcium carbonate is particularly preferred. Incidentally, calcium carbonate is sometimes classified to an extender pigment.

The amount of the colorant is about 0.01 to 20 parts by weight (e.g., about 0.1 to 20 parts by weight), preferably about 1 to 15 parts by weight, and more preferably about 5 to 15 parts by weight relative to 100 parts by weight of the polyethylene terephthalate-series resin. In the case where the amount of the colorant is less than 0.01 part by weight, the colorant cannot give color to the resin effectively. In the case where the amount of the colorant is more than 20 parts by weight, mechanical properties of the resin is deteriorated extremely, as a result, it is difficult to use the resin for a shaped article such as a lighting equipment.

Incidentally, combination use of the bromine-containing flame retardant (B) comprising at least an alkylene bisbromoaryl compound with the colorant (D) comprising at least calcium carbonate ensures significant improvement in flame retardancy and heat fading resistance of the polyethylene terephthalate-series resin. The ratio (the weight rate) of the bromine-containing flame retardant relative to the colorant [the former/the latter] is about 20/80 to 80/20, preferably about 25/75 to 60/40, and more preferably about 30/70 to 50/50.

### [Antioxidant (E)]

The antioxidant includes a hindered phenol-series compound, a thioether-series compound, a phosphite-series compound, and others. As the hindered phenol-series antioxidant, there may be mentioned, for example, a C₂₋ ₁₀alkanediol-bis[3-(3,5-di-t-butyl-4-hydroxyphenyl)propionate] such as 1,6-hexanediol-bis[3-(3,5-di-t-butyl-4-hydroxyphenyl)propionate], an oxyC₂₋₄alkanediol-bis[3-(3,5-dialkyl-4-hydroxyphenyl)propionate] such as triethylene glycol-bis[3-(3-t-butyl-5-methyl-4-hydroxypheny)propionate], a C₃₋₈alkanetriol-tris[3-(3,5-di-t-butyl-4-hydroxyphenyl)propionate] such as glycerin-tris[3-(3,5-di-t-butyl-4-hydroxyphenyl)propionate], a C₄₋ ₈alkanetetraoltetrakis[3-(3,5-di-t-butyl-4-hydroxyphenyl)propionate] such as pentaerythritoltetrakis[3-(3,5-di-t-butyl-4-hydroxyphenyl)propionate], a derivative of tris-(3,5-di-t-butyl-4-hydroxybenzyl)triazine such as tris-(3,5-di-t-butyl-4-hydroxybenzyl)-isocyanurate, 1,3,5-trimethyl-2,4,6-tris-(3,5-di-t-butyl-4-hydroxybenzyl)benzene, or an alkylidenebis-(3-methyl-6-t-butylphenol) such as 4,4'-butylidenebis-(3-methyl-6-t-butylphenol). Among these antioxidants, a compound having a triazine ring [e.g., tris-(3,5-di-t-butyl-4-hydroxyphenyl C₁₋₄alkyl)-triazine] is particularly preferred.

As the thioether-series antioxidant, there may be exemplified a di C₁₀₋₂₂alkyl-3,3-thiodipropionate such as dilauryl-3,3'-thiodipropionate, dimyristyl-3,3'-thiodipropionate, distearyl-3,3'-thiodipropionate, or laurylstearyl-3,3'-thiodipropionate; pentaerythrityltetrakis(3-laurylthiopropionate); tetrakis[methylene-3-(dodecylthio)propionate]methane; and others. The preferred thioether-series antioxidant includes a tetrakispropionate, for example, a tetrakis[methylene-3-(C₁₀₋₂₂alkylthio)propionate]methane such as tetrakis[methylene-3-(dodecylthio)propionate]methane.

The phosphite-series antioxidant includes trisnonylphenylphosphite, distearylpentaerythritol-di-phosphite, tris-(2,4-di-t-butylphenyl)phosphite, tetrakis(2,4-di-t-butylphenyl)-4,4'-biphenylene-di-phosphite, bis-(2,4-di-t-butylphenyl)pentaerythritol-di-phosphite, bis-(2,6-di-t-butylphenyl-4-methyl)pentaerythritol-di-phosphite, and others.

It is preferred that the antioxidant comprises at least one member selected from the group consisting of the hindered phenol-series compound and the thioether compound (in particular the hindered phenol-series antioxidant). In the case using the hindered phenol-series antioxidant in combination with the thioether-series and/or phosphite-series antioxidant, more excellent effects on heat fading resistance may be anticipated. In particular, the antioxidant preferably comprises a hindered phenol-series compound and a thioether-series compound in combination.

The amount of the antioxidant is about 0.01 to 5 parts by weight (e.g., about 0.05 to 5 parts by weight), preferably about 0.02 to 3 parts by weight, more preferably about 0.02 to 1 part by weight, and usually about 0.5 to 1.5 parts by weight relative to 100 parts by weight of the polyethylene terephthalate-series resin.

### [Flame-retardant synergist (flame-retardant auxiliary agent)]

The flame-retardant synergist synergistically improves the flame retardancy in combination with the bromine-containing flame retardant. The flame-retardant synergist includes an antimony-containing flame-retardant synergist such as an antimony oxide (e.g., antimony trioxide, antimony pentoxide), or an antimonate (e.g., a metal salt of antimonic acid such as sodium antimonate or magnesium antimonate, or ammonium antimonate). As the preferred flame-retardant synergist, antimony trioxide Sb₂O₃ and/or xNa₂O·Sb₂O₅·yH₂O (x=0 to 1, y=0 to 4) can be exemplified. The flame-retardant synergist (s) may be used singly or in combination.

The mean particle size of the flame-retardant synergist may for example be selected from a range within about 0.02 to 5 µm, and is usually about 0.1 to 3 µm. Moreover, if desired, a flame-retardant synergist surface-treated with a finishing agent (such as an epoxy compound, a silane compound, an isocyanate compound or a titanate compound) may be also used.

The amount of the antimony-containing flame-retardant synergist is not more than 20 parts by weight (e.g., about 1 to 20 parts by weight), preferably about 1 to 15 parts by weight, and more preferably about 2 to 10 parts by weight relative to 100 parts by weight of the polyethylene terephthalate-series resin. In order to impart effective flame-retardancy, it is preferred that the flame-retardant synergist is blended to the flame retardant at a proportion of about 20 to 70 parts by weight, preferably about 30 to 60 parts by weight relative to 100 parts by weight of the flame retardant.

### [Inorganic filler]

As the inorganic filler, a fibrous filler or a non-fibrous filler may be used. The fibrous filler includes, for example, an inorganic fiber such as a glass fiber, a carbon fiber, a silica·alumina fiber, a zirconia fiber, an asbestos fiber, a silica fiber, a potassium titanate fiber, a boron nitride fiber, a wollastonite, or a metal fiber (e.g., a fibrous material made of a metal such as stainless, aluminum, titanium, copper or brass). The inorganic fiber may be a whisker. The typical fibrous filler may be the glass fiber or the carbon fiber.

Incidentally, the mean fibrous diameter of the fibrous filler is, for example, about 0.1 to 10 µm, preferably about 0.1 to 5 µm, and more preferably about 0.1 to 3 µm. The aspect ratio of the fibrous filler is about 2 to 1000, preferably about 3 to 500, and more preferably about 5 to 300.

The non-fibrous filler includes a particulate (or powdered) or amorphous filler [for example, a metal oxide such as a silica, a quartz powder, an iron oxide or an alumina; a silicate such as a glass bead, a glass powder, a milled glass fiber, a feldspar-series mineral, calcium silicate, aluminum silicate, a kaolin, a clay or a diatomaceous earth; a metal carbonate such as calcium carbonate or magnesium carbonate; a metal sulfate such as calcium sulfate or barium sulfate; or a silicon carbide], a plate-like filler (e.g., a kaolin clay), a scale-like (or scale-configuration) filler (e.g., a mica, a glass flake or a variety of metal foil), and the like. As the non-fibrous filler, it is preferred to use a glass flake, a mica (for example, a mica powder), a talc, a glass bead or a milled glass fiber. Incidentally, the mean particle size of the particulate (or powdered) filler is, for example, about 0.1 to 10 µm, preferably about 0.1 to 5 µm, and more preferably about 0.1 to 3 µm.

The inorganic filler(s) may be used singly or in combination. Among these inorganic fillers, use of at least the fibrous filler (reinforcing filler) ensures high mechanical strength and rigidity to the shaped article. Moreover, the above-mentioned fibrous filler (e.g., the glass fiber) may be used in combination with the particulate filler and/or plate-like filler.

Incidentally, the above-mentioned inorganic filler, if necessary, may be treated with a binder or finishing agent such as an epoxy-series compound, an acrylic compound, an isocyanate-series compound, a silane-series compound or a titanate-series compound.

The amount of the filler is not more than 150 parts by weight (e.g., about 5 to 150 parts by weight), preferably about 5 to 120 parts by weight, and more preferably about 10 to 100 parts by weight (e.g., about 30 to 100 parts by weight) relative to 100 parts by weight of the polyethylene terephthalate-series resin.

### [Additive]

The resin composition of the present invention may comprise various additives, for example, a lubricant, a mold-releasing agent, a stabilizer (e.g., an ultraviolet ray absorbing agent, a light stabilizer, a heat stabilizer) , an antistatic agent, a fluorescent whitening agent (a fluorescent brightener), or a modifier (e.g., an impact modifier, a flowability-improving agent), without detriment to the purpose of the invention.

Further, in order to both impart higher flame-retardancy (e.g., the flame-retardancy meets to approx. "V-0" of UL 94 Standard) to the shaped article and to inhibit dropping (or dripping) from a flaming substance, a fluorine-containing resin (e.g., a particulate fluorine-containing resin) may be used as an anti-dripping agent in combination. Exemplified as the above-mentioned fluorine-containing resin is a homopolymer such as a polytetrafluoroethylene, a polychlorotrifluoroethylene or a polyvinylidenefluoride; or a copolymer such as a tetrafluoroethylene-hexafluoropropylene copolymer, a tetrafluoroethylene-perfluoroalkylvinylether copolymer, an ethylene-tetrafluoroethylene copolymer, or an ethylene-chlorotrifluoroethylene copolymer. The fluorine-containing resin(s) may be used singly or in combination.

The proportion of the anti-dripping agent is, for example, about 0.5 to 5 parts by weight, preferably about 0.7 to 4 parts by weight, and more preferably about 1 to 3 parts by weight relative to 100 parts by weight of the polyethylene terephthalate-series resin (A).

To the resin composition of the present invention, if desired, may be added a plasticizer in order to increase the mobility of the polyethylene terephthalate-series resin in a supercooling state, and to enhance crystallinity of a shaped article obtained from the resin composition. In particular, since the small content of the inorganic filler (e.g., a glass fiber) causes deterioration in rigidity at a high temperature in a molding process and is apt to decrease mold-releasing property, it is preferred to add a plasticizer to the resin composition. The plasticizer includes a polyester-series compound [for example, an aliphatic polyester (e.g., an aliphatic polyester obtained from the reaction of an aliphatic C₄₋₁₂dicarboxylic acid with an aliphatic C₂₋₁₀diol or a polyoxyalkylene glycol), a derivative of an aliphatic polyester (e.g., a reaction product of the above-mentioned aliphatic polyester and an aromatic carboxylic acid, e.g., a diaromatic acyl aliphatic polyester of the aliphatic polyester)], or a polyether-series plasticizer [a derivative of a polyalkylene glycol, for example, an aromatic carboxylic acid ether of a polyoxyalkylene glycol such as a polyethylene glycol dibenzoate (bland name "KRM4004")]. The amount of the plasticizer is about 0.01 to 20 parts by weight, preferably about 0.02 to 15 parts by weight, and more preferably about 0.03 to 9 parts by weight relative to 100 parts by weight of the polyethylene terephthalate resin.

The flame-retardant polyethylene terephthalate-series resin composition of the present invention shows not only high flame-retardancy but also high heat fading resistance. For example, in dry heat test or heat-accelerated degradation test heated at 210°C for 24 hours in an oven (e.g., a gear oven) without controlling a humidity, the resin composition shows a characteristic that the degree of discoloration (or color difference) represented by ΔE value in hue change (L*a*b color system) is not more than 15 (e.g., about 0 to 15), and especially about 5 to 15 (e.g., about 8 to 15). Therefore, the shaped article formed from the flame-retardant resin composition of the present invention may be utilized for various purposes influenced by at least heat (in particular heat and light). Such a shaped article may be utilized as an electrical or electronic part, an automotive part or a machine part, for example, a housing, a casing or a part. In particular, the shaped article formed with the flame-retardant resin composition of the present invention is useful for a member of a lighting apparatus (or a part or member for a lighting equipment), e. g. , sockets (e. g. , a socket for a general incandescent lamp, a morgal socket, a socket for a bright discharge lamp, or a sardine socket), holders (e.g., a holder for fixing a light source, such as a holder for a round-ring fluorescent lamp, or a holder for fixing a light source unit or lighting unit, such as a holder for lighting), a reflector, a ballast, or others.

### [Production process]

The flame-retardant resin composition of the present invention may be prepared easily as a particulate mixture or a melting mixture by mixing the above-mentioned constituent components, and if necessary, an additive(s) by means of a conventional manner (a mixing method, e.g., dry-mixing, or melt-mixing such as melt-extrusion or melt-kneading). For example, the resin composition may be prepared by mixing the constituent components uniformly with a blender etc., and melt-kneading the mixture at a melting temperature (e.g., 200 to 300°C, and preferably 250 to 290°C) with a means such as a Banbury mixer, a heating roller, or a monoaxial or multiaxial extruder. In this process, the following manner is also applicable: a part of the components of the resin composition is pre-kneaded in advance, and then all of the constituent components are prepared at a predetermined compounding ratio and kneaded. Incidentally, in the case making a part of the constituent components of the resin composition to be a fine particle and mixing it with other components, the constituent components may be blended uniformly. The flame-retardant resin composition of the present invention may be in the form of a pellet, as well as in the form of a powder, a granule, or a flake.

The shaped article of the present invention may be formed from the flame-retardant resin composition. Such a shaped article may be easily produced by melt-kneading the flame-retardant resin composition, and molding by a conventional manner such as extrusion molding, injection molding, blow molding or compression molding. Incidentally, the process for molding (or forming) the shaped article of the present invention is not particularly limited, and injection molding is preferred.

### INDUSTRIAL APPLICABILITY

The flame-retardant polyethylene terephthalate-series resin composition of the present invention effectively ensures inhibition of discoloration even when heat and/or light acts thereon, and realizes prevention of hue change. In addition, the resin composition not only has high flame retardancy but also strikes a balance between mechanical properties and heat fading resistance at a high level. Further, the polyethylene terephthalate-series resin subjected to polymerization in the presence of a germanium-containing catalyst shows excellent resistance to heat/humidity, and hardly deteriorates even under high temperature and humidity. Therefore, the flame-retardant polyethylene terephthalate-series resin composition is useful for forming a shaped article, in particular a lighting equipment and others.

### EXAMPLES

The following examples are intended to describe this invention in further detail and should by no means be interpreted as defining the scope of the invention. Incidentally, characteristics of shaped articles were determined based on the following methods.

### [Initial hue and color fastness]

The initial hue and the change of hue by a dry heat test (or heat-accelerated degradation test) were evaluated based on the values, "L", "a" and "b", according to L*a*b color system. Incidentally, the dry heat test was conducted by leaving a test piece to stand for 24 hours in a gear oven at 210°C.

### [Flammability]

The flammability was evaluated by using a test piece having a given thickness according to the method of the Subject 94 of the US Underwriter Laboratories (UL-94).

### [Measurements of physical properties]

The tensile test was operated in accordance with the ASTMD638.

### [Resistance to heat/humidity]

A test piece was treated at 121°C for 40 hours in saturated stream under pressure. Then, the maximum strength of the test piece was evaluated in a tensile test in accordance with ASTMD638. The retention (%) was determined based on the tensile strength of the treated test piece relative to the untreated test piece.

### Examples 1 to 6 and Comparative Examples 1 to 2

The molding pellet was obtained by the following procedure: dry-blending the following components uniformly at a given ratio in advance, melt-kneading the blended mixture by using a biaxial extruder equipped with a vent having a screw diameter of 44 mm in conditions of a cylinder temperature of 240 to 265°C, a screw rotation frequency of 160 rpm, and a discharge rate of 40 kg/h for extruding in the form of a thread, and cutting the resultant after cooling to obtain a molding pellet. The obtained pellet was molded into a socket for lighting by means of an injection-molding apparatus having an injection capacity of 145 cm³ in conditions of a cylinder temperature of 270°C, a mold temperature of 120°C, an injection pressure of 800 kg/cm², a cooling time of 15 seconds, and a total molding cycle time of 26 seconds. The obtained sockets were used for various evaluation. The results are shown in Tables 1 and 2 as well as the components used in Examples and Comparative Examples.
Polyethylene terephthalate (1) ["TRF", manufactured by Teijin Ltd.]: an antimony-containing polymerization catalyst was used
Polyethylene terephthalate (2) [ "TRU-N", manufactured by Ueno Shouten limited private company]: a germanium-containing polymerization catalyst was mainly used Inorganic (reinforcing) filler ["T-124", a glass fiber manufactured by Nippon Electric Glass Co., Ltd.] Bromine-containing flame retardant: the temperature of the following bromine-containing flame retardants was measured when 5% by weight reduction of the flame retardant was given on heating at a heating rate of 10°C/min. under a nitrogen stream by means of a thermal analysis apparatus (TGA 7 Thermogravimetric Analyzer, manufactured by PerkinElmer, Inc.). The used bromine-containing flame retardants are listed below with the loss-on-heating temperature thereof.

(a) Brominated bisphenol A epoxy resin ["EP100", manufactured by Dainippon Ink And Chemicals, Incorporated]: 350°C
(b) Ethylene bistetrabromophthalimide ["BT-93W", manufactured by Albemarle Corporation]: 410°C
(c) Ethylene bistetrabromophthalimide ["BT-93R", manufactured by Albemarle Corporation]: 405°C
(d) Brominated polystyrene ["HP-7010", manufactured by Albemarle Corporation]: 380°C

Flame-retardant synergist: antimony trioxide ["PATOX-M", manufactured by Nihon Mining & Concentrating Co., Ltd. ] Talc ["PKNN", manufactured by Hayashi Kasei Co., Ltd.] Colorant:
(a) Titanium dioxide [ "CR-80" , manufactured by Ishihara Sangyo Kaisha, Ltd.]
(b) Calcium carbonate ["Calcium carbonate S", manufactured by Sankyo Seifun K.K.]

Antioxidant:
(a) Tris-(3,5-di-t-butyl-4-hydroxybenzyl)-isocyanurate ["Irg3114", manufactured by Ciba Specialty Chemicals K.K.]
(b) Pentaerythrityl-tetrakis(3-laurylthiopropionate) ["AO-412S", manufactured by Asahi Denka Kogyo K.K.]
(c) Tetrakis[methylene-3-(3,5-di-t-butyl-4-hydroxyphenyl)propionate]methane ["Irg1010", manufactured by Ciba Specialty Chemicals K.K.]

Mold-releasing agent: Montanic acid ester-series mold-releasing agent

Plasticizer: [BCL/dibenzoyl polycaprolactone, manufactured by Daicel Chemical Industries, Ltd.]

**Table 1**

| Composition (weight %) | Ex.1 | Ex.2 | Ex.3 | Com.Ex.1 | Com.Ex.2 |
|---|---|---|---|---|---|
| Polyethylene terephthalate | TRF 53.2 | TRF 53.2 | TRF 53.2 | TRF 53.2 | TRF 53.2 |
| Inorganic filler | T-124 35 | T-124 35 | T-124 35 | T-124 35 | T-124 35 |
| Bromine-containing flame retardant | BT-93W 3.4 | BT-93R 3.4 | HP7010G 3.4 | EP100 3.4 | EP100 3.4 |
| Antimony-containing flame-retardant synergist | PATOX-M 1.4 | PATOX-M 1.4 | PATOX-M 1.4 | PATOX-M 1.4 | PATOX-M 1.4 |
| Talc | PKNN 1 | PKNN 1 | PKNN 1 | PKNN 1 | PKNN 1 |
| Colorant | CR-80 2.5 Calcium carbonates 2.5 | Calcium carbonates 5 | Calcium carbonates 5 | CR-80 2.5 Calcium carbonates 2.5 | Calcium carbonates 5 |
| Stabilizer, etc. | Irg3114 0.3 AO412S 0.2 mold-releasing agent 0.5 | Irg3114 0.3 AO412S 0.2 mold-releasing agent 0.5 | Irg3114 0.3 AO412S 0.2 mold-releasing agent 0.5 | Irg3114 0.3 AO412S 0.2 mold-releasing agent 0.5 | Irg3114 0.3 AO412S 0.2 mold-releasing agent 0.5 |

| Initial stage | | | | | |
|---|---|---|---|---|---|
| L | 88 | 83 | 81 | 88 | 85 |
| a | -1.8 | -5.3 | -3 | -1.4 | -2.0 |
| b | 6 | 17 | 9 | 5 | 8 |

| 210°C, 24 hours after | | | | | |
|---|---|---|---|---|---|
| L | 76 | 73 | 72 | 63 | 59 |
| a | 1 | 0.3 | 2 | 5 | 8 |
| b | 13 | 19 | 15 | 16 | 20 |
| Color difference (ΔE) | 14 | 12 | 13 | 28 | 30 |
| Tensile strength (MPa) | 127 | 160 | 157 | 128 | 150 |
| UL flammability test (1.6 mm thick) | V-2 | V-2 | V-2 | V-2 | V-2 |

As shown in Table 1, in Comparative Examples 1 and 2, flame retardancy and mechanical properties satisfy required properties, however, the degree of discoloration described as ΔE value are too large in the dry heat test. On the other hand, in Examples 1 to 3, the color difference represented as ΔE value is not more than 15 in the harsh dry heat test, and the degree of discoloration can be restrained remarkably. Moreover, the shaped articles of Examples 1 to 3 show a tensile strength of not less than 120 MPa, and have sufficient strength to hold an electric lamp as a socket for lighting. In particular, in Examples 2 and 3 using calcium carbonate, the shaped articles having a tensile strength of not less than 150 MPa are obtainable. Further, regarding the flammability test, the shaped articles of Examples 1 to 3 show "V-2" level in flame retardancy in 1.6 mm thickness, and satisfy demands required to sockets for lighting.

**Table 2**

| Composition (weight %) | Ex.4 | Ex.5 | Ex.6 |
|---|---|---|---|
| Polyethylene terephthalate | TRU-N 62.5 | TRU-N 58.5 | TRF 62.5 |
| Inorganic filler | T-124 20 | T-124 20 | T-124 20 |
| Bromine-containing flame retardant | BT-93W 4.3 | BT-93W 10 | BT-93W 4.3 |
| Antimony-containing flame-retardant synergist | PATOX-M 1.7 | - | PATOX-M 1.7 |
| Talc | PKNN 3 | PKNN 3 | PKNN 3 |
| Colorant | Calcium carbonate S 5 | Calcium carbonate S 5 | Calcium carbonate S 5 |
| Stabilizer, etc. | Irg1010 0.3 AO412S 0.2 Plasticizer 2.5 mold-releasing agent 0.5 | Irg1010 0.3 AO412S 0.2 Plasticizer 2.5 mold-releasing agent 0.5 | Irg1010 0.3 AO412S 0.2 Plasticizer 2.5 mold-releasing agent 0.5 |

| Initial stage | | | |
|---|---|---|---|
| L | 84 | 85 | 83 |
| a | -2.8 | -3.2 | -2.0 |
| b | 8.5 | 9 | 8.0 |

| 210°C, 24 hours after | | | |
|---|---|---|---|
| L | 76 | 78 | 73 |
| a | 0.9 | -0.1 | 1.2 |
| b | 17 | 14 | 19 |
| Color difference (ΔE) | 12 | 9 | 15 |
| Tensile strength (MPa) | 120 | 120 | 107 |
| Resistance to heat/humidity (%) | 75 | 71 | 51 |
| UL flammability test (1.6 mm thick) | V-2 | V-2 | V-2 |

As apparent from Table 2, Examples 4 to 6 show a color difference represented as ΔE value of not more than 15 in the harsh dry heat test, and therefore can significantly restrain the degree of discoloration. Further, Example 4, using a germanium-containing catalyst for preparing a polyethylene terephthalate-series resin, shows more excellent strength retention under a wet-heat condition than Example 6, using an antimony-containing catalyst for preparing a polyethylene terephthalate-series resin, thereby being more suitable for a special lighting equipment in need of resistance to heat/humidity.

## Claims

1. A flame-retardant polyethylene terephthalate-series resin composition, which comprises:
(A) a polyethylene terephthalate-series resin,
(B) a bromine-containing flame retardant in which 5% by weight reduction from the initial weight thereof is given at a temperature of not less than 360°C under heating the flame retardant at a heating rate of 10°C/min. in a nitrogen stream,
(C) a crystallization accelerator,
(D) a colorant, and
(E) an antioxidant.

2. A flame-retardant polyethylene terephthalate-series resin composition according to claim 1, which has a color difference represented by a ΔE value of not more than 15 under heating the composition at 210°C for 24 hours.

3. A flame-retardant polyethylene terephthalate-series resin composition according to claim 1, wherein the polyethylene terephthalate-series resin (A) comprises a resin obtained by using at least a germanium-containing compound as a catalyst.

4. A flame-retardant polyethylene terephthalate-series resin composition according to claim 1, wherein the bromine-containing flame retardant (B) comprises at least one component selected from the group consisting of a brominated polystyrene and an alkylenebisbromoaryl compound.

5. A flame-retardant polyethylene terephthalate-series resin composition according to claim 1, wherein the colorant (D) comprises at least calcium carbonate.

6. A flame-retardant polyethylene terephthalate-series resin composition according to claim 1, wherein the antioxidant (E) comprises at least one member selected from the group consisting of a hindered phenol-series compound and a thioether compound.

7. A flame-retardant polyethylene terephthalate-series resin composition according to claim 1, which comprises the bromine-containing flame retardant (B) containing at least an alkylenebisbromoaryl compound, and the colorant (D) containing at least calcium carbonate.

8. A flame-retardant polyethylene terephthalate-series resin composition according to claim 1, which comprises:
the polyethylene terephthalate-series resin (A) comprising a polyethylene terephthalate-series resin,
the bromine-containing flame retardant (B) in which 5% by weight reduction from the initial weight thereof is given at a temperature of 370 to 500°C under heating the flame retardant at a heating rate of 10°C/min. in a nitrogen stream,
an organic nucleating agent and/or a talc (C),
the colorant (D) comprising calcium carbonate, and
the antioxidant (E) comprising a hindered phenol-series compound and a thioether-series compound.

9. A flame-retardant polyethylene terephthalate-series resin composition according to claim 1, which further comprises at least one component selected from the group consisting of an antimony-containing flame-retardant synergist and an inorganic filler.

10. A flame-retardant polyethylene terephthalate-series resin composition according to claim 1, which comprises 5 to 60 parts by weight of the bromine-containing flame retardant (B), 0.01 to 20 parts by weight of the crystallization accelerator (C), 0.01 to 20 parts by weight of the colorant (D), and 0.01 to 5 parts by weight of the antioxidant (E), relative to 100 parts by weight of the polyethylene terephthalate-series resin (A).

11. A flame-retardant polyethylene terephthalate-series resin composition according to claim 1, which is used for a lighting equipment.

12. A shaped article formed with a flame-retardant polyethylene terephthalate-series resin composition recited in claim 1.
